Europäisches Patentamt

European Patent Office

Office européen des brevets

(19)

(11) **EP 1 598 801 A1**

(12) **EUROPEAN PATENT APPLICATION**

(43) Date of publication:
   **23.11.2005 Bulletin 2005/47**

(51) Int Cl.7: **G09G 3/28**

(21) Application number: **05103850.3**

(22) Date of filing: **10.05.2005**

(84) Designated Contracting States:
   **AT BE BG CH CY CZ DE DK EE ES FI FR GB GR
   HU IE IS IT LI LT LU MC NL PL PT RO SE SI SK TR**
   Designated Extension States:
   **AL BA HR LV MK YU**

(30) Priority: **21.05.2004 KR 2004036330**

(71) Applicant: **Samsung SDI Co., Ltd.**
   **Suwon-si Gyeonggi-do (KR)**

(72) Inventor: **Lee, Joo-Yul, Legal & IP Team,**
   **Kiheung-Eup, Yongin-City, Kyeonggi-Do (KR)**

(74) Representative: **Hengelhaupt, Jürgen**
   **Anwaltskanzlei**
   **Gulde Hengelhaupt Ziebig & Schneider**
   **Wallstrasse 58/59**
   **10179 Berlin (DE)**

(54) **Driving method of plasma display panel and plasma display**

(57) The plasma display panel includes a subfield having a sub-reset period for performing a reset operation in a discharge cell where a sustain-discharge is generated in a previous subfield among a plurality of subfields, and a subfield having a main reset period for performing a reset operation in discharge cells. In a conventional reset period, the wall charge state between a scan electrode and an address electrode may not be uniform because a discharge between the scan electrode and a sustain electrode is generated by a wall voltage between the scan electrode and the sustain electrode formed by a sustain discharge before a discharge between the scan electrode and the address electrode. The wall voltage between the scan and sustain electrodes is erased in the present invention.

*FIG.2*

## Description

## BACKGROUND OF THE INVENTION

## Field of the Invention

The present invention relates to a plasma display panel and driving method thereof, and a plasma display.

## Discussion of the Background

A plasma display panel (PDP) displays characters and images using plasma generated by gas discharge, and it may include hundreds of thousands to millions of pixels arranged in a matrix format, where the PDP's size determines the number of pixels.

The PDP may operate by dividing a field into a plurality of weighted subfields, and gray scales may be represented by a sum of weights according to a combination of turned-on subfields. Each subfield may have a reset period, an address period, and a sustain period. In the reset period, wall charges of a previous sustain-discharging are erased, and wall charges are generated for subsequent, stable address discharging. In the address period, cells that are to be turned on and cells that are to be turned off are selected, and wall charges accumulate to the cells that are to be turned on. In the sustain period, a discharge for substantially displaying images on the addressed cells is performed.

In the reset period, a high voltage may be applied in order to generate discharges within, and reset, the cells. However, the screen may blur if the reset discharge is generated when 0 gray scales are represented on it. Accordingly, resetting by a weak discharge has been suggested to reduce this blur. However, the screen may still be blurred because the weak discharge may be generated in the reset period of the subfields when the reset by the weak discharge is performed.

U.S. Patent No. 6,294,875 discloses a method for applying a reset waveform to one subfield of a field in order to prevent blurring. In the method, a waveform for resetting the cells may be applied in a first subfield of a field, and a waveform for resetting a cell that had a sustain-discharge in a previous subfield may be applied in the other subfields. Accordingly, the blur effect on the screen may be eliminated because the weak discharge may be generated in the reset period of the first subfield when 0 gray scales are represented on a full screen.

In this method, a high voltage may be applied to a scan electrode, a sustain-discharge ends, a sustain electrode may be biased at a predetermined voltage, and the voltage at the scan electrode may decrease in a ramp form. When the high voltage is applied to the scan electrode and sustain-discharge is generated, negative (-) wall charges may form on the scan electrode and positive (+) wall charges may form on the sustain electrode. Hence, the sustain period may finish while a wall voltage at the sustain electrode corresponding to the scan electrode is high. Accordingly, a discharge may be first generated between the scan electrode and the sustain electrode when reducing a voltage at the scan electrode, and another discharge may be generated between the scan electrode and the address electrode. At this time, the main reset discharge may be generated between the scan electrode and the sustain electrode. Accordingly, wall charge states between the scan electrode and the address electrode may not be uniform in the cells. In cells having insufficient wall charges formed between the scan electrode and the address electrode, if selected, a weak discharge may be generated in the address period, which may generate fewer wall charges, thereby generating an insufficient sustain-discharge in the sustain period. On the other hand, in cells having excess wall charges formed between the scan electrode and the address electrode, a misfiring discharge, which occurs when a non-selected cell is sustain discharged, may be generated.

## SUMMARY OF THE INVENTION

The present invention provides a method for driving a PDP for mainly generating a reset discharge between an address electrode and a scan electrode in a sub-reset period.

In the present invention, wall charges between the scan electrode and a sustain electrode may be erased in the sub-reset period.

Additional features of the invention will be set forth in the description which follows, and in part will be apparent from the description, or may be learned by practice of the invention.

The present invention discloses a method for driving a PDP that includes a plurality of first electrodes, a plurality of second electrodes, a plurality of third electrodes crossing the first electrodes and the second electrodes, and a discharge cell formed by the first electrodes, the second electrodes, and the third electrodes. In the method, a field is divided into a plurality of subfields. At least one subfield among the plurality of subfields has a sub-reset period for performing a reset operation in a discharge cell in which a sustain-discharge is generated in a previous subfield. In the sub-reset period, wall charges formed on a first electrode and a second electrode by the sustain-discharge of the previous subfield are erased, and a wall voltage state between a third electrode and the first electrode is reset into a state which is able to perform an address operation.

The present invention also discloses a method for driving a PDP that includes a plurality of first electrodes, a plurality of second electrodes, a plurality of third electrodes crossing the first electrodes and the second electrodes, and a discharge cell formed by the first electrodes, the second electrodes, and the third electrodes. A field is divided into a plurality of subfields. In the method, in a reset period of at least one first subfield among the plurality of subfields, a value obtained by subtracting a voltage at a second electrode from a voltage at a first electrode is gradually increased from a first voltage to a second voltage, and the value is gradually reduced from a third voltage to a fourth voltage. In a reset period of at least one second subfield among the plurality of subfields, a value obtained by subtracting a voltage at the second electrode from a voltage at the first electrode is gradually increased from a fifth voltage to a sixth voltage, which is less than the second voltage, and the value is gradually reduced from a seventh voltage to an eighth voltage.

The present invention also discloses a method for driving a PDP that includes a plurality of first electrodes, a plurality of second electrodes, a plurality of third electrodes crossing the first electrodes and the second electrodes, and a discharge cell formed by the first electrodes, the second electrodes, and the third electrodes. A field is divided into a plurality of subfields. In the method, a voltage which is higher than a voltage at a first electrode by a first voltage is applied to a second electrode for a first period for the purpose of sustain-discharging in the sustain period of the subfield which is prior to at least one second subfield among the plurality of subfields. A voltage which is higher than a voltage at the second electrode by a second voltage is applied to the first electrode for a second period in a reset period of the second subfield. A value obtained by subtracting the voltage at the second electrode from the voltage at the first electrode is reduced from a third voltage to a fourth voltage in the second subfield.

The present invention also discloses a method for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, wherein a field is divided into a plurality of subfields, and at least one subfield among the plurality of subfields has a sub-reset period for performing a reset operation in a discharge cell in which a sustain-discharge is generated in a sustain period of a previous subfield. The method comprises ending the sustain period of the previous subfield after generating the sustain-discharge by applying a voltage of a first level to the second electrode. In the sub-reset period, a voltage at the first electrode is gradually decreases from a second level to a third level, and the second level is less than the first level.

The present invention also discloses a method for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, wherein a field is divided into a plurality of subfields, and at least one subfield among the plurality of subfields has a sub-reset period for performing a reset operation in a discharge cell in which a sustain-discharge is generated in a sustain period of a previous subfield. The method comprises ending the sustain period of the previous subfield after generating the sustain-discharge by applying a voltage of a first level to the second electrode. In the sub-reset period, a voltage at the first electrode is gradually increased from the first level to a second level, and a voltage at the first electrode is gradually decreased from the first level to a third level.

The present invention also discloses a device for driving a PDP including a plurality of first electrodes, a plurality of second electrodes, a plurality of third electrodes crossing the first electrodes and the second electrodes, and discharge cells formed by the first electrodes, the second electrodes, and the third electrodes. The device comprises a controller for controlling the division of a field into a plurality of subfields to be driven, and a driver for applying a first reset waveform substantially generating a reset discharge in discharge cells in a reset period of at least one first subfield, and for applying a second reset waveform generating a reset discharge in a discharge cell in which a sustain-discharge is generated in a previous subfield in a reset period of at least one second subfield. At this time, the second reset waveform includes a first driving waveform for gradually increasing voltage differences between the first electrode and the second electrode, and between the first electrode and the third electrode, and a second driving waveform for establishing a wall voltage in the discharge cell to generate a discharge between the first electrode and the third electrode before generating a discharge between the first electrode and the second electrode.

It is to be understood that both the foregoing general description and the following detailed description are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 is a schematic diagram showing a plasma display according to exemplary embodiments of the present invention.

FIG. 2 shows driving waveforms of a PDP according to a first exemplary embodiment of the present invention.

FIG. 3A, FIG. 3B, FIG. 3C and FIG. 3D show wall charge states when a sustain-discharge is generated in a sustain period of a first subfield of FIG. 2.

FIG. 4A and FIG. 4B show wall charge states when a sustain-discharge is not generated in the sustain period of the first subfield of FIG. 2.

FIG. 5, FIG. 6, FIG. 7 and FIG. 8 show driving waveforms of a PDP according to second, third, fourth and fifth exemplary embodiments of the present invention.

FIG. 9A and FIG. 9B show falling waveforms that may be applied in the reset period.

## DETAILED DESCRIPTION

In the following detailed description, only certain exemplary embodiments of the present invention are shown and described, simply by way of illustration. As those skilled in the art would realize, the described embodiments may be modified in various ways, all without departing from the spirit or scope of the present invention. Accordingly, the drawings and description are to be regarded as illustrative in nature, and not restrictive. There may be parts shown in the drawings, or parts not shown in the drawings, that are not discussed in the specification as they are not essential to a complete understanding of the invention. Like reference numerals designate like elements.

In the present invention, wall charges indicate charges formed on a wall of discharge cells neighboring to each electrode and accumulated to electrodes. Although the wall charges do not actually touch the electrodes, it will be described that the wall charges are "generated," "formed," or "accumulated" thereon. Also, a wall voltage represents a potential difference formed on the wall of the discharge cells by the wall charges. Further, "erase," "erasing," and "erased" does require removal of all traces of the thing being erased.

Exemplary embodiments of the present invention will now be described in detail with reference to the drawings.

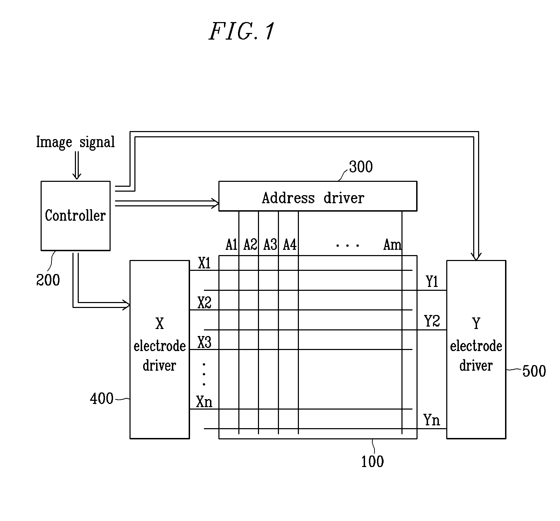

As shown in FIG. 1, the plasma display according to an exemplary embodiment of the present invention may includes a PDP 100, a controller 200, an address driver 300, a sustain electrode driver 400, and a scan electrode driver 500.

The PDP 100 may include: a plurality of address electrodes $A_1$ to $A_m$ arranged in the column direction, and a plurality of scan electrode $Y_1$ to $Y_n$ and sustain electrode $X_1$ to $X_n$ pairs alternately arranged in the row direction. The sustain electrodes $X_1$ to $X_n$ may be formed corresponding to the respective scan electrodes $Y_1$ to $Y_n$. The PDP 100 may include a substrate on which the sustain electrodes $X_1$ to $X_n$ and the scan electrodes $Y_1$ to $Y_n$ are arranged, and another substrate on which the address electrodes $A_1$ to $A_m$ are arranged. The two substrates face each other with a gap therebetween so that the scan electrodes $Y_1$ to $Y_n$ and the sustain electrodes $X_1$ to $X_n$ cross the address electrodes $A_1$ to $A_m$. At this time, portions of a discharge space between the address electrodes $A_1$ to $A_m$ and crossing parts of pairs of the scan electrodes $Y_1$ to $Y_n$ and the sustain electrodes $X_1$ to $X_n$ form discharge cells. The sustain and scan electrodes are covered with a dielectric layer, and the address electrodes are covered with an insulator layer and phosphor for color expressions. This formation of the PDP 100 is an example, and another formation of a panel for applying driving waveforms described below may be applied to the present invention.

The controller 200 receives an external image signal, and transmits an address electrode driving control signal, a Y electrode driving signal, and an X electrode driving signal. The controller 200 may divide a field into a plurality of weighted subfields and represent gray scales by combining weights of turned-on subfields. The controller may also divide a subfield into a reset period, an address period, and a sustain period.

In the reset period, the drivers 300, 400, and 500 may apply voltages for reset operations to the address $A_1$ to $A_m$, sustain $X_1$ to $X_n$, and scan $Y_1$ to $Y_n$ electrodes to establish wall charge states of cells to stably perform an address operation. In exemplary embodiments of the present invention, the reset period includes a main reset period and a sub-reset period. In the main reset period, reset discharges are generated in the cells. In the sub-reset period, reset discharges are generated in a cell that has been sustain discharged in a previous subfield.

In the address period, the scan electrode driver 500 applies selection voltages to the scan electrodes $Y_1$ to $Y_n$ in an order for selecting the scan electrodes (e.g. sequentially), and the address electrode driver 300 receives an address driving control signal from the controller 200 and applies an address voltage for selecting a cell to be turned on to the respective address electrodes $A_1$ to $A_m$. That is, a cell may be selected by simultaneously applying the selection voltage to the scan electrode and the address voltage to the address electrode.

In the sustain period, the sustain electrode driver 400 and the scan electrode driver 500 receive control signals from the controller 200 and apply sustain-discharge voltages to the sustain electrodes and the scan electrodes.

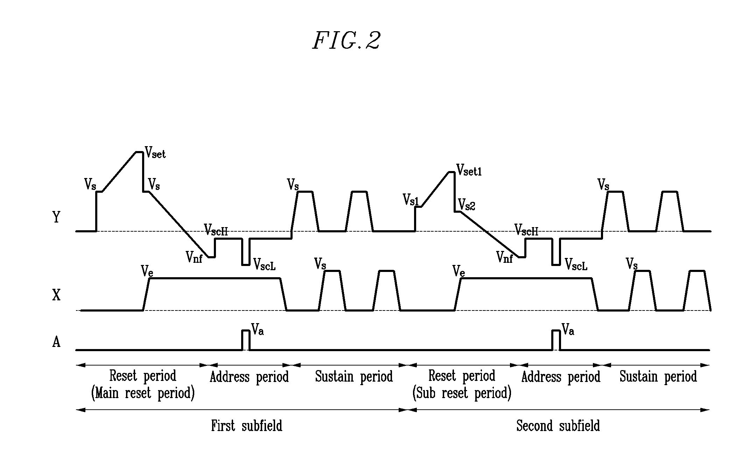

Driving waveforms applied to the address electrodes $A_1$ to $A_m$, the sustain electrodes $X_1$ to $X_n$, and the scan electrodes $Y_1$ to $Y_n$ will be described with reference to FIG. 2, FIG. 3, FIG. 4, FIG. 5, FIG. 6, FIG. 7, and FIG. 8 based on a cell formed by an address (A) electrode, a sustain (X) electrode, and a scan (Y) electrode.

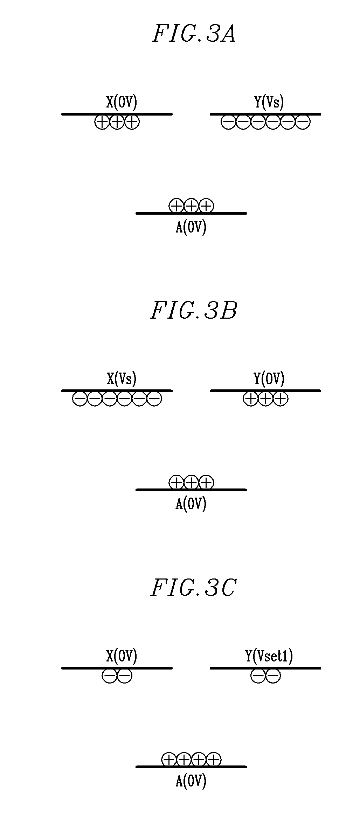

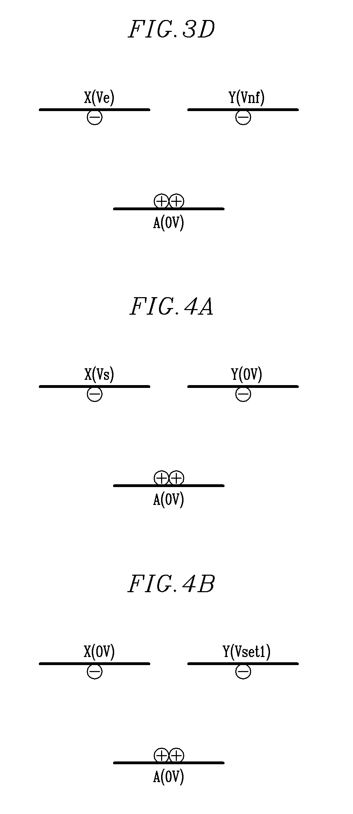

FIG. 2 shows driving waveforms of a PDP according to a first exemplary embodiment of the present invention. FIG. 3A, FIG. 3B, FIG. 3C and FIG. 3D show wall charge states when a sustain-discharge is generated in a sustain period of a first subfield of FIG. 2, and FIG. 4A and FIG. 4B show wall charge states when a sustain-discharge is not generated in the sustain period of the first subfield of FIG. 2. FIG. 2 shows two subfields among a plurality of subfields, which are represented as a first subfield and a second subfield.

A main reset waveform gradually rising from a voltage of Vs to a voltage of Vset and gradually falling from the voltage of Vs to a voltage of Vnf may be applied to the Y electrode in the reset period of the first subfield.

A ramp voltage at the Y electrode may gradually increase from the voltage of Vs to the voltage of Vset while biasing the X electrode and the A electrode at a reference voltage, which is assumed to be 0V in FIG. 2. While the voltage at the Y electrode increases, a weak discharge may be generated between the Y electrode and the X electrode, and between the Y electrode and the A electrode, and negative (-) wall charges may be formed on the Y electrode and positive (+) wall charges may be formed on the X electrode. The weak discharge may be generated and wall charges formed so that a sum of an externally applied voltage and the wall voltage in the cell may be maintained at a discharge firing voltage state when the voltages at the electrodes are gradually varied as shown in FIG. 2. U.S. Patent No. 5,745,086 discloses related technology.

The voltage at the Y electrode may be reduced from the voltage of Vs to the voltage of Vnf while biasing the A electrode and the X electrode at the reference voltage and the voltage of Ve, respectively. The weak discharge may be generated between the Y electrode and the X electrode, and between the Y electrode and the A electrode, while the voltage at the Y electrode is reduced. The negative (-) wall charges in the Y electrode may be erased, and the positive (+) wall charges in the X electrode and the A electrode may be erased. The voltage of Ve and the voltage of Vnf may be established so that the wall voltage between the Y electrode and the X electrode is near 0V in order to prevent a misfiring discharge in a non-selected cell. That is, a voltage of (Ve-Vnf) may be established to be near the discharge firing voltage between the Y electrode and the X electrode.

In the address period, while maintaining the X electrode at the voltage of Ve, a scan pulse having a voltage of VscL and an address pulse having a voltage of Va may be respectively applied to the Y electrode and the A electrode in order to select a cell to be turned on. A non-selected Y electrode may be biased at a voltage of VscH, which is greater than the voltage of VscL, and the reference voltage may be applied to the address electrode of the cell not to be turned on. At this time, the voltage of VscL may be equal to or different from the voltage of Vnf.

While applying the scan pulse of the voltage of VscL to the Y electrode in a first row ($Y_1$ in FIG. 1), the address pulse of the voltage of Va may be applied to the A electrode in the cell to be displayed among the first row, thereby generating an address discharge between them. Another discharge may be generated between the Y electrode $Y_1$ and the X electrode ($X_1$ in FIG. 1) neighboring the Y electrode. Accordingly, positive (+) wall charges are formed in the Y electrode, and negative (-) wall charges are formed in the A electrode and the X electrode.

While applying the scan pulse of the voltage of VscL to the Y electrode in a second row ($Y_2$ in FIG. 1), the address pulse of the voltage of Va may be applied to the A electrode in a cell to be displayed among the second row, thereby generating an address discharge in the cell formed by the A electrode and the $Y_2$ electrode. Wall charges may be formed as described above. While applying the scan pulse of the voltage of VscL to the Y electrodes in the other rows, the address pulse of the voltage of Va may be applied to the A electrode in the cell to be displayed, thereby forming the wall charges.

In the sustain period, a sustain pulse having the voltage of Vs may be applied to the Y electrode and the reference voltage may be applied to the X electrode because the positive (+) wall charges are formed on the Y electrode and the negative (-) wall charges are formed on the X electrode by the previous address discharge. At this time, the voltage of Vs may generate the sustain discharge between the Y electrode and the X electrode when added together with the wall voltage formed between the Y electrode and the X electrode by the address discharge. The sustain discharge may be generated between the Y electrode and the X electrode in a cell that was address discharged in the address period. As shown in FIG. 3A, in a cell where the sustain-discharge is generated, positive (+) wall charges and negative (-) wall charges may be formed on the X electrode and the Y electrode, respectively, and positive (+) wall charges may be formed on the A electrode .

Next, the reference voltage may be applied to the Y electrode while applying the sustain pulse of the voltage of Vs to the X electrode. At this time, a sustain discharge is generated between the Y electrode and the X electrode because the wall voltage is formed between the Y electrode and the X electrode by the previous sustain-discharge. Therefore, as shown in FIG. 3B, positive (+) wall charges and negative (-) wall charges may be formed on the Y electrode and the X electrode, respectively, and positive (+) wall charges may be formed on the A electrode.

The sustain-discharge pulse may be alternately applied to the Y electrode and to the X electrode depending upon a weight of a corresponding subfield. The discharge is previously generated between the Y electrode and the X electrode because the wall voltage of the X electrode corresponding to the Y electrode is established high and a difference between the voltages applied to the Y electrode and the X electrode is greater than a difference between the voltages applied to the Y electrode and the A electrode when the voltage at the Y electrode is gradually reduced (that is, the reset operation is performed) while the voltage of Vs is applied to the Y electrode as described in the prior art. The weak discharge between the X electrode and the Y electrode is mainly generated compared to the weak discharge between the A electrode and the Y electrode, and therefore the wall charge states in the A electrode and the Y electrode are not properly formed.

Accordingly, in the first exemplary embodiment of the present invention, a sub-reset waveform gradually rising from a voltage of Vs1 to a voltage of Vset1 and gradually falling from a voltage of Vs2 to the voltage of Vnf may be applied to the Y electrode in the reset period of the second subfield.

After applying the voltage of Vs to the X electrode in the sustain period of the first subfield to generate wall charges in the cell as shown in FIG. 3B, the reference voltage may be applied to the X electrode and the voltage at the Y electrode may gradually increase to the voltage of Vset1. A weak discharge may be generated between the Y electrode and the X electrode when a sum of the voltage at the Y electrode and the wall voltage between the X electrode and the Y electrode exceeds the discharge firing voltage Vfxy because a potential of the wall charges in the X electrode is greater than a potential of the wall charges in the Y electrode in FIG. 3B. Additionally, while the voltage at the Y electrode increases, a weak discharge may also be generated between the Y electrode and the A electrode when a sum of the voltage at the Y electrode and the wall voltage between the Y electrode and the A electrode exceeds the discharge firing voltage Vfay.

However, the discharge firing voltage Vfay between the A electrode and the Y electrode may be less than the discharge firing voltage Vfxy between the X electrode and the Y electrode. Consequently, as FIG. 3C shows, the wall voltage at the A electrode corresponding to the Y electrode may be greater than the wall voltage at the X electrode corresponding to the Y electrode. Here, the voltage at the Y electrode gradually increases from the voltage of Vs1 because the length of the reset period would be increased if the voltage at the Y electrode started from the reference voltage. The voltage of Vs1 may be established so that a sum of the wall voltage formed in a state shown in FIG. 3B and the voltage of Vs1 does not exceed the discharge firing voltage Vfxy between the X electrode and the Y electrode. The voltage of Vs1 may be established to be less than the voltage of Vs and greater than the reference voltage because the sustain discharge is generated between the X electrode and the Y electrode when the voltage of Vs is applied in the state shown in FIG. 3B.

The voltage at the Y electrode may be gradually reduced from the voltage of Vs2 to the voltage of Vnf while applying the voltage of Ve and the reference voltage to the X electrode and the A electrode, respectively. FIG. 3D shows the resulting charge states. Gradually reducing the the voltage at the Y electrode from the voltage of Vset1 to the voltage of Vnf would increase the length of the reset period. Therefore, the voltage at the Y electrode may be reduced from a voltage of Vs2, which may be a level that does not cause the discharge. At this time, because the wall voltage between the Y electrode and the A electrode may be greater than the wall voltage between the Y electrode and the X electrode, and the discharge firing voltage Vfay between the Y electrode and the A electrode is less than the discharge firing voltage Vfxy between the Y electrode and the X electrode, a weak discharge may be generated first between the A electrode and the Y electrode even when applying the voltage of Ve to the X electrode. Accordingly, the wall charge states between the A electrode and the Y electrode may be uniformly formed in the cells because the weak discharge between the X electrode and the Y electrode is mainly formed in the reset period compared to the weak discharge between the A electrode and the Y electrode.

In the second subfield, a cell may be selected by the address discharge in the address period, and the sustain-discharge operation may be performed for selected cells in the sustain period. At this time, the address discharge may be uniformly generated in the address period because the wall charge states between the A electrodes and the Y electrodes of the cells may be similarly established in the reset period, thereby preventing insufficient discharges and misfiring discharges.

The reset operation described in the second subfield may also be performed in the following subfields. Also, subfields such as the first and second subfields shown in FIG. 2 may be provided together in the plurality of subfields forming a field.

Conditions of the voltage of Vset1 in the driving waveform according to the first exemplary embodiment of the present invention will now be described. The reset period of the second subfield is a sub-reset period. Therefore, the reset discharge may be generated when the sustain-discharge is generated in a previous subfield. That is, the voltage of Vset1 may be established so that a reset discharge is not generated when a sustain discharge is not generated in the previous subfield. The voltage of Vset1 may be established to be less than the voltage of Vset because a discharge may be generated in the cells when the voltage at the Y electrode increases to the voltage of Vset as described above.

The cell may be maintained at the wall charge state established in the reset period of the previous subfield, as shown in FIG. 4A, because the address discharge is not generated when the sustain discharge is not generated in the previous subfield. Equation 1 shows a wall voltage Vwnf at the Y electrode corresponding to the X electrode because the voltage of Vnf is applied to the Y electrode and the voltage of Ve is applied to the X electrode in the final reset period.

[Equation 1]

$$Vwnf = -Vfxy - Vnf + Ve$$

where Vfxy denotes an absolute value of the discharge firing voltage between the X electrode and the Y electrode.

A sum of the wall voltage Vwnf at the Y electrode corresponding to the X electrode and the voltage at the Y electrode may not exceed the discharge firing voltage Vfxy so that a discharge may not be generated in the reset period of the second subfield in the cell having the wall charge state as shown in Equation 1. No discharge may be generated in the reset period when a sum of the voltage of Vset1 and the wall voltage Vwnf at the Y electrode is less than the discharge firing voltage as shown in Equation 2. That is, as shown in FIG. 4B, the cell may be maintained at the wall charge state established in the reset period of the previous subfield. The voltage of Vset1 satisfies Equation 3 according to Equation 1 and 2. Additionally, the voltage of (Ve-Vnf) may correspond to the discharge firing voltage Vfxy because the wall voltage between the X electrode and the Y electrode may be near 0V in the reset period for the purpose of preventing the misfiring discharge in the sustain period. Accordingly, the voltage of Vset1 in the reset period of the second subfield may be less than the discharge firing voltage Vfxy between the X electrode and the Y electrode, that is, the voltage of (Ve-Vnf)

[Equation 2]

$$Vwnf + Vset1 < Vfxy$$

[Equation 3]

$$Vset1 \leq 2Vfxy - (Ve - Vnf) \quad Vfxy \quad Ve - Vnf$$

The wall voltage may be erased between the X electrode and the Y electrode and the wall voltage may be formed between the A electrode and the Y electrode in a direction that the potential caused by the wall charges of the A electrode is increased when the voltage of Vset1 is established to be greater than the discharge firing voltage Vfay between the A electrode and the Y electrode, and is established to be near the discharge firing voltage Vfxy. Accordingly, in the falling period of the reset period, the discharge between the A electrode and the Y electrode may be generated before the discharge between the X electrode and the Y electrode.

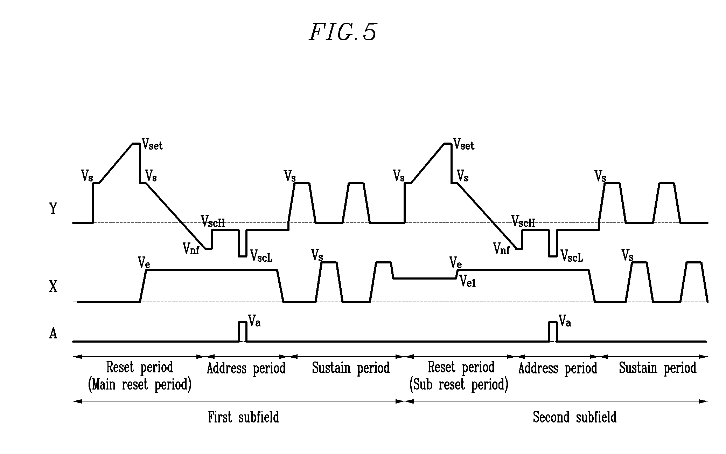

In the first exemplary embodiment of the present invention, the voltage at the Y electrode gradually increases to the voltage of Vset1. As FIG. 5 shows, it may also increase to the voltage of Vset.

As shown in FIG. 5, driving waveforms according to the second exemplary embodiment of the present invention correspond to those according to the first exemplary embodiment except for voltages applied to the X electrode and the Y electrode in the reset period of the second subfield, that is, the sub-reset period.

In the reset period of the second subfield, the voltage at the Y electrode may gradually increase from the voltage of Vs to the voltage of Vset while biasing the voltage at the X electrode at a voltage of Ve1, which is less than the voltage of Ve. At this time, the wall voltage between the X electrode and the Y electrode may correspond to the voltage at the Y electrode, increased to the voltage of Vset1 in the first exemplary embodiment, when a difference between the voltage of Vset and the voltage of Ve1 equals the voltage of Vset1 The voltage at the Y electrode may increase from the voltage of Vs in order to reduce the length of the reset period. The wall voltage at the A electrode corresponding to the Y electrode may be greater than that in the first exemplary embodiment because the voltage difference Vset between the Y electrode and the A electrode greater than the voltage difference Vset1 in the first exemplary embodiment. Therefore, the discharge between the A electrode and the Y electrode may be more stably generated than in the first exemplary embodiment.

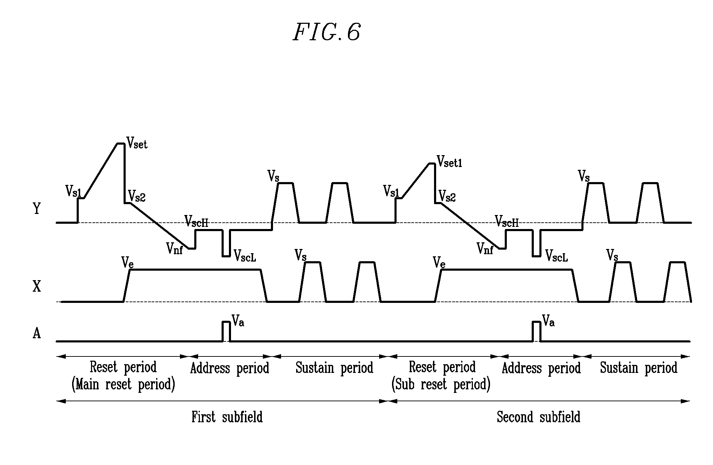

FIG.6 shows that starting voltages for the gradually rising and falling voltages in the main reset waveform of the first subfield and the sub-reset waveform of the second subfield may be equal.

As shown in FIG. 6, driving waveforms according to a third exemplary embodiment of the present invention correspond to those according to the first exemplary embodiment except for a rising start voltage Vs1 and a falling start voltage Vs2 in the reset period of the first subfield, that is, the main reset period.

In the reset period of the first subfield (main reset period), the voltage at the Y electrode may gradually increase from the voltage of Vs1 to the voltage of Vset and gradually decrease from the voltage of Vs2 to the voltage of Vnf. At this time, the voltage of Vs1 and the voltage of Vs2 may respectively correspond to the voltage Vs1, which is the start of the rising voltage at the Y electrode, and a voltage Vs2, which is the start of the falling voltage at the Y electrode, in the sub-reset period. Accordingly, except for the voltages Vset and Vset1 at the top of the rising ramps, the main reset waveform and the sub-reset waveform may substantially correspond to each other.

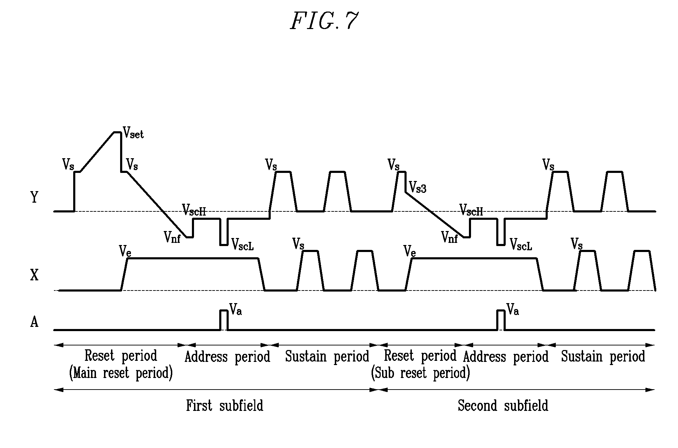

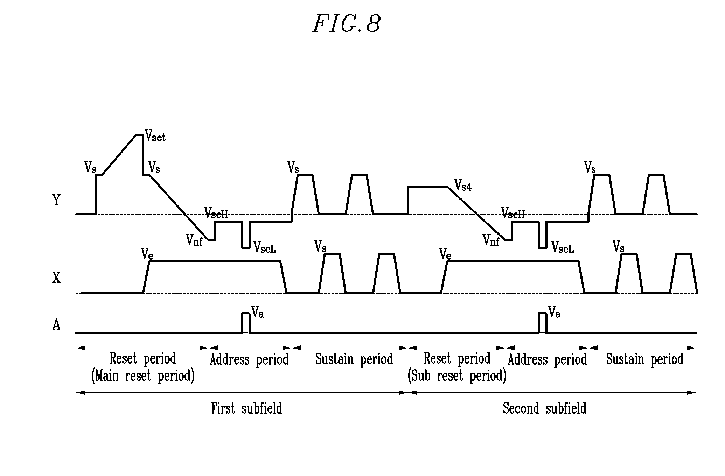

While the wall charges may be erased by gradually increasing the voltage at the Y electrode in the sub-reset period, as shown in the first, second and third exemplary embodiments of the present invention, there are other ways to erase them. FIG. 7 and FIG. 8 show such exemplary embodiments.

As shown in FIG. 7, the wall charges between the X electrode and the Y electrode may be erased by a narrow pulse in driving waveforms according to a fourth exemplary embodiment of the present invention. The narrow pulse may be a pulse having a voltage substantially corresponding to the voltage of the sustain discharge pulse, but is a narrower pulse than the sustain-discharge pulse.

After applying the voltage of Vs to the X electrode in the sustain period of the first subfield, resulting in the charge state shown in FIG. 3B, the reference voltage may be applied to the X electrode and the narrow pulse having the voltage of Vs may be applied to the Y electrode. The discharge may be generated between the Y electrode and the X electrode by the wall voltage formed between the Y electrode and the X electrode and the voltage of Vs, however, the voltage at the Y electrode may be reduced before the discharge finishes. Accordingly, the wall charges formed in the Y electrode and the X electrode may be erased because they are involved in discharging and the voltage of Vs is erased before inverse charges accumulate on the Y electrode and the X electrode. The wall voltage at the A electrode corresponding to the Y electrode may also increase because the positive (+) wall charges formed in the A electrode are not involved in discharging. At this time, the narrow pulse may not generate the discharge in a cell that was not sustain-discharged in the previous subfield because the wall voltage is not formed between the Y electrode and the X electrode in such a cell.

The voltage at the Y electrode may gradually decrease to the voltage of Vnf. At this time, the discharge may be mainly generated between the Y electrode and the A electrode because of the reduced wall voltage between the Y electrode and the X electrode. The voltage at the Y electrode may be steeply reduced to a voltage Vs3 at which a discharge is not generated in order to reduce the length of the reset period as described above.

As shown in FIG. 8, the wall charges between the X electrode and the Y electrode may be erased by a wide pulse in driving waveforms according to a fifth exemplary embodiment of the present invention. The wide pulse may be a pulse having a voltage that is less than the voltage of the sustain-discharge pulse applied in the sustain period, but is wider than the sustain-discharge pulse. Additionally, a voltage of the wide pulse together with the wall voltage may generate a discharge.

After applying the voltage of Vs to the X electrode in the sustain period of the first subfield, resulting in the charge state shown in FIG. 3B, the reference voltage may be applied to the X electrode and the wide pulse having a voltage of Vs4, which is less than the voltage of Vs, may be applied to the Y electrode. The discharge may be generated between the Y electrode and the X electrode by the voltage of Vs4 and the wall voltage formed between the Y electrode and the X electrode. At this time, the discharge may be generated slightly as compared to a conventional sustain-discharge. Hence, the wall charges formed in the Y electrode and the X electrode may be erased because they are involved in discharging. The wall voltage at the A electrode corresponding to the Y electrode may increase because the positive (+) wall charges formed in the A electrode are not involved in discharging. At this time, the wide pulse may not generate the discharge in a cell that was not sustain-discharged in the previous subfield because the wall voltage is not formed between the Y electrode and the X electrode in such a cell.

The voltage at the Y electrode may gradually decrease to the voltage of Vnf. At this time, the discharge may be mainly generated between the Y electrode and the A electrode because of the reduced wall voltage between the Y electrode and the X electrode.

As described above in the exemplary embodiments of the present invention, in the sub-reset period, the wall charges formed on the Y electrode and the X electrode by a sustain-discharge of a previous subfield may be erased before a discharge is generated between the Y electrode and the A electrode, which resets the wall voltage state between them. Specifically, when the wall charges are erased, and the wall voltage at the A electrode corresponding to the Y electrode increases, the discharge may be more stably generated between the Y electrode and the A electrode.

While two subfields are shown and described in the exemplary embodiments of the present invention, a first subfield in a field may be formed as the first subfield and other subfields in the field may be formed like the second subfield. Also, more than two subfields like the first subfield may be used in a field.

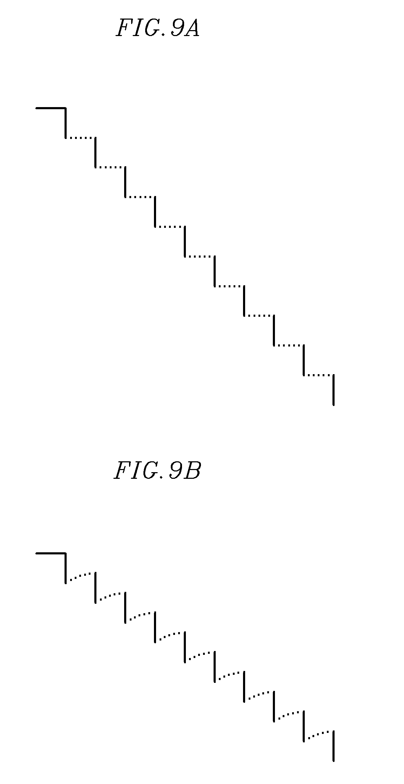

While the voltage at the Y electrode increases or decreases in the reset period in a ramp form in FIG. 2, FIG. 5, FIG. 6, FIG. 7, and FIG. 8, it may also increase or decrease in a curved form. The voltage at the Y electrode may gradually vary by repeatedly applying a voltage to the Y electrode and then floating the Y electrode. FIG. 9A and FIG. 9B show such driving waveforms.

Referring to FIG. 9A, the voltage applied to the Y electrode may decrease at a predetermined rate, the voltage supplied to the Y electrode is then interrupted, and the Y electrode is floated for a predetermined time. This operation may be repeated for a predetermined number of times.

A discharge may be generated between the Y electrode and the A electrode when a voltage difference between the Y electrode and the A electrode (or between the Y electrode and the X electrode; hereinafter, a difference between the Y electrode and the A electrode will be exemplified) exceeds the discharge firing voltage. The voltage at the Y electrode may be varied according to a quantity of the wall charges because charges are not supplied from an external power when the discharge starts between the Y electrode and the A electrode, and the Y electrode is floated. Accordingly, the discharge may be erased by less variation of the wall charges because the variation of the wall charges causes a reduction of the voltage in the discharge space (cell). The voltage at the floated Y electrode may increase by a predetermined voltage as shown in FIG. 9B when the voltage in the discharge space is reduced.

The wall charges formed in the Y electrode and the X electrode may be reduced, the voltage in the discharge space may be steeply reduced, and intensive discharge extinction may be generated in the discharge space when the discharge is generated by a reduction of the voltage at the Y electrode. Intensive discharge extinction may also be generated in the discharge space while the wall charges are reduced when the discharge is formed by reducing the voltage at the Y electrode and floating the Y electrode. The wall charges may be reduced as maintaining at the discharge firing voltage when this operation is repeatedly performed for a predetermined number of times.

While FIG. 9A and FIG. 9B show a falling waveform, the voltage at the Y electrode may be increased by a predetermined voltage and the Y electrode may then be floated in the rising waveform.

While the rising waveform, the narrow pulse, and the wide pulse for reducing the wall charges in the Y electrode and the X electrode are shown in the reset period in the exemplary embodiments of the present invention, they may also be included in a sustain period of a previous subfield because they generate a discharge when the sustain-discharge is generated in the sustain period of the previous subfield.

The voltage applied to the Y electrode, X electrode, and the A electrode may vary if it satisfies a relative voltage difference between the electrodes while the voltage at the Y electrode gradually varies in the exemplary embodiments of the present invention.

According to exemplary embodiments of the present invention, a discharge is mainly generated between the Y electrode and the A electrode in the sub-reset period because the wall charges formed in the Y electrode and the X electrode in the sustain period are reduced and the wall voltage at the A electrode corresponding to the Y electrode is increased. The wall charges between the Y electrode and the A electrode of the cells may be set in the sub-reset period to perform a proper address operation.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

**Claims**

1.  A method for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, wherein a field is divided into a plurality of subfields, and at least one subfield among the plurality of subfields has a sub-reset period for performing a reset operation in a discharge cell in which a sustain-discharge is generated in a previous subfield, the method comprising:

    in the sub-reset period,
    erasing wall charges formed on a first electrode and a second electrode by the sustain-discharge of the previous subfield; and
resetting a wall voltage state between a third electrode and the first electrode into a state that is able to perform an address operation.

2.  The method of claim 1, wherein when resetting the wall voltage state, a voltage at the first electrode is gradually reduced from a third voltage to a fourth voltage while a first voltage is applied to the second electrode and a second voltage is applied to the third electrode.

3.  The method of claim 2, wherein when erasing wall charges, the voltage at the first electrode is gradually increased from a sixth voltage to a seventh voltage while a fifth voltage is applied to the second electrode.

4.  The method of claim 3, wherein the sustain-discharge in the previous subfield fmishes after applying a voltage to the second electrode that is higher than a voltage being applied to the first electrode.

5.  The method of claim 3, wherein a difference between the seventh voltage and the fifth voltage is less than a difference between the first voltage and the fourth voltage.

6.  The method of claim 3, wherein the sixth voltage is lower than a high voltage applied to the first electrode for a sustain-discharge in a sustain period.

7.  The method of claim 3, wherein the third voltage is lower than a high voltage applied to the first electrode for a sustain-discharge in a sustain period.

8.  The method of claim 3, wherein the fifth voltage is a ground voltage.

9.  The method of claim 3,
    wherein at least one subfield among the plurality of subfields includes a main reset period for substantially performing a reset operation on discharge cells; and
    wherein the seventh voltage corresponds to a maximum voltage applied to the first electrode in the main reset period, and the fifth voltage is higher than a voltage applied to the second electrode while the maximum voltage is applied to the first electrode.

10. The method of claim 1,
    wherein when erasing wall charges, a pulse having an eighth voltage is applied to the first electrode; and
    wherein the pulse is narrower than a sustain-discharge pulse applied to the first electrode for a sustain-discharge in a sustain period.

**11.** The method of claim 10,

wherein the eighth voltage corresponds to a voltage of the sustain-discharge pulse, and

wherein a voltage, corresponding to a voltage applied to the second electrode while the sustain-discharge pulse is applied to the first electrode, is applied to the second electrode while the eighth voltage is applied to the first electrode.

**12.** The method of claim 1,

wherein when erasing wall charges, a pulse having a ninth voltage, which is less than a voltage of a sustain-discharge pulse, is applied to the first electrode; and

wherein the pulse is wider than the sustain-discharge pulse applied to the first electrode for a sustain-discharge in a sustain period.

**13.** The method of claim 12, wherein a voltage, corresponding to a voltage applied to the second electrode while the sustain-discharge pulse is applied to the first electrode, is applied to the second electrode while the ninth voltage is applied to the first electrode.

**14.** A method for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, wherein a field is divided into a plurality of subfields, the method comprising:

gradually increasing a value, obtained by subtracting a voltage at a second electrode from a voltage at a first electrode, from a first voltage to a second voltage, and gradually reducing the value from a third voltage to a fourth voltage, during a reset period of at least one first subfield among the plurality of subfields; and

gradually increasing a value, obtained by subtracting a voltage at the second electrode from a voltage at the first electrode, from a fifth voltage to a sixth voltage, which is less than the second voltage, and gradually reducing the value from a seventh voltage to an eighth voltage, during a reset period of at least one second subfield among the plurality of subfields.

**15.** The method of claim 14, wherein the eighth voltage corresponds to the fourth voltage.

**16.** The method of claim 14, wherein the sixth voltage is less than an absolute value of the eighth voltage.

**17.** The method of claim 16, wherein the fifth voltage is lower than the first voltage.

**18.** The method of claim 16, wherein the seventh voltage is equal to or lower than the third voltage.

**19.** The method of claim 14,

wherein in the reset period of the first subfield, a discharge is generated in discharge cells while the value is gradually increased from the first voltage to the second voltage; and

wherein in the reset period of the second subfield, a discharge is generated in a discharge cell in which a sustain-discharge is generated in a previous subfield while the value is gradually increased from the fifth voltage to the sixth voltage.

**20.** The method of claim 14, wherein the reset period of the second subfield is performed after applying a voltage, which is higher than a voltage simultaneously applied to the first electrode, to the second electrode for the purpose of sustain-discharging in a sustain period of a previous subfield.

**21.** A method for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, wherein a field is divided into a plurality of subfields, the method comprising:

applying a voltage, which is higher than a voltage at a first electrode by a first voltage, to a second electrode for a first period for a purpose of sustain-discharging in a sustain period of a subfield which is prior to at least one second subfield among the plurality of subfields;

applying a voltage, which is higher than a voltage at the second electrode by a second voltage, to the first electrode for a second period in a reset period of the second subfield; and

reducing a value, obtained by subtracting the voltage at the second electrode from the voltage at the first electrode, from a third voltage to a fourth voltage in the reset period of the second subfield.

**22.** The method of claim 21, wherein the second period is shorter than the first period.

**23.** The method of claim 22, wherein the second voltage corresponds to the first voltage.

**24.** The method of claim 21,

wherein the second period is longer than the first period; and

wherein the second voltage is less than the first voltage.

**25.** The method of claim 21, further comprising, in a reset period of at least one first subfield among the plurality of subfields:

gradually increasing a voltage at the first electrode from a fifth voltage to a six voltage; and gradually reducing the voltage at the first electrode from a seventh voltage to an eighth voltage.

**26.** A method for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, wherein a field is divided into a plurality of subfields, and at least one subfield among the plurality of subfields has a sub-reset period for performing a reset operation in a discharge cell in which a sustain-discharge is generated in a sustain period of a previous subfield, the method comprising:

ending the sustain period of the previous subfield after generating the sustain-discharge by applying a voltage of a first level to the second electrode; and in the sub-reset period, gradually decreasing a voltage at the first electrode from a second level to a third level,

wherein the second level is less than the first level.

**27.** The method of claim 26, further comprising:

in the sub-reset period, gradually increasing a voltage at the first electrode from a fourth level to a fifth level,

wherein the fourth level is less than the first level.

**28.** The method of claim 26, wherein when applying the voltage of the first level to the second electrode, a ground voltage is applied to the first electrode.

**29.** A method for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, wherein a field is divided into a plurality of subfields, and at least one subfield among the plurality of subfields has a sub-reset period for performing a reset operation in a discharge cell in which a sustain-discharge is generated in a sustain period of a previous subfield, the method comprising:

ending the sustain period of the previous subfield after generating the sustain-discharge by applying a voltage of a first level to the second electrode; and in the sub-reset period, gradually increasing a voltage at the first electrode from the first level to a second level; and gradually decreasing a voltage at the first electrode from the first level to a third level.

**30.** A device for driving a plasma display panel including a plurality of first electrodes, a plurality of second electrodes, a plurality of third electrodes crossing the first electrodes and the second electrodes, and discharge cells formed by the first electrodes, the second electrodes, and the third electrodes, the device comprising:

a controller for controlling division of a field into a plurality of subfields to be driven; and a driver for applying a first reset waveform substantially generating a reset discharge in discharge cells in a reset period of at least one first subfield and applying a second reset waveform generating a reset discharge, in a discharge cell in which a sustain-discharge is generated in a previous subfield, in a reset period of at least one second subfield,

wherein the second reset waveform comprises

a first driving waveform for gradually increasing a voltage difference between the first electrode and the second electrode, and a voltage difference between the first electrode and the third electrode, and

a second driving waveform for establishing a wall voltage in the discharge cell to generate a discharge between the first electrode and the third electrode before generating a discharge between the first electrode and the second electrode.

## FIG.1

Image signal

Controller

200

300

Address driver

A1 A2 A3 A4 ... Am

X
electrode
driver

400

X1
X2
X3
:
:
Xn

Y1

Y2

Y
electrode
driver

500

Yn

100

EP 1 598 801 A1

## FIG.2

## FIG.3A

X(0V)                    Y(Vs)
⊕⊕⊕                  ⊖⊖⊖⊖⊖⊖

⊕⊕⊕
A(0V)

## FIG.3B

X(Vs)                    Y(0V)
⊖⊖⊖⊖⊖⊖            ⊕⊕⊕

⊕⊕⊕
A(0V)

## FIG.3C

X(0V)                    Y(Vset1)
⊖⊖                    ⊖⊖

⊕⊕⊕⊕
A(0V)

FIG.3D

X(Ve)
⊖

Y(Vnf)
⊖

⊕⊕
A(0V)

FIG.4A

X(Vs)
⊖

Y(0V)
⊖

⊕⊕
A(0V)

FIG.4B

X(0V)
⊖

Y(Vset1)
⊖

⊕⊕
A(0V)

EP 1 598 801 A1

# FIG.5

Y

X

A

Reset period | Address period | Sustain period
(Main reset period)

Reset period | Address period | Sustain period
(Sub reset period)

First subfield

Second subfield

*FIG.6*

*FIG. 7*

# FIG.8

EP 1 598 801 A1

*FIG. 9A*

*FIG. 9B*

20

# EP 1 598 801 A1

**European Patent Office**

## PARTIAL EUROPEAN SEARCH REPORT

which under Rule 45 of the European Patent Convention shall be considered, for the purposes of subsequent proceedings, as the European search report

**Application Number**

EP 05 10 3850

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 324 302 A (LG ELECTRONICS INC) 2 July 2003 (2003-07-02) * paragraphs [0048] - [0061], [0085] - [0088], [0091] - [0094]; figures 4,5,10,11 * ----- | 1-30 | G09G3/28 |
| A | EP 1 022 715 A (MATSUSHITA ELECTRIC INDUSTRIAL CO., LTD) 26 July 2000 (2000-07-26) * paragraphs [0040] - [0053], [0056] - [0065]; figures 1-3 * ----- | 1-30 | |
| A | US 2002/135542 A1 (KIM JIN-SUNG ET AL) 26 September 2002 (2002-09-26) * paragraphs [0031] - [0049]; figures 3,7,8 * ----- | 1-30 | |
| A | US 2003/030598 A1 (KANAZAWA YOSHIKAZU ET AL) 13 February 2003 (2003-02-13) * paragraphs [0024] - [0033]; figures 3,4,6,7 * ----- -/-- | 1-30 | |

**TECHNICAL FIELDS SEARCHED (Int.Cl.7)**

G09G

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 22 August 2005 | Vázquez del Real, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

21

**European Patent Office**

**PARTIAL EUROPEAN SEARCH REPORT**

Application Number

EP 05 10 3850

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A | EP 1 047 042 A (FUJITSU LIMITED) 25 October 2000 (2000-10-25) * paragraphs [0040] - [0060]; figures 9,10,13,14 * ----- | 1-30 | |
| | | | **TECHNICAL FIELDS SEARCHED** (Int.Cl.7) |

EPO FORM 1503 03.82 (P04C10)

**European Patent
Office**

**INCOMPLETE SEARCH
SHEET C**

Application Number

EP 05 10 3850

Claim(s) searched incompletely:
        1-30

Claim(s) not searched:
            -

Reason for the limitation of the search:

The present application contains 30 claims, of which 6 are independent.
There is no clear distinction between the independent claims because of
overlapping scope. There are so many claims, and they are drafted in such
a way that the claims as a whole are not in compliance with the
provisions of clarity and conciseness (EPC Article 84), as it is
particularly burdensome for a skilled person to establish the subject
matter for which protection is sought. The non-compliance with the
substantive provisions is to such an extent, that a meaningful search of
the whole claimed subject matter could not be carried out (Rule 45 EPC
and EPC Guidelines B-VIII, 3). The extent of the search was consequently
limited.

The search was based on the subject matter, as far as can be understood,
that could reasonably be expected to be claimed later in the procedure,
and the corresponding claims, namely :

A method for driving a plasma display device including a plurality of
sustain electrodes, a plurality of scan electrodes, a plurality of
address electrodes crossing the scan and sustain electrodes, and
discharge cells formed by the scan, sustain and address electrodes, the
method comprising (paragraph [0028]):

applying a first reset waveform generating a normal reset discharge in
discharge cells in a reset period of at least one first subfield and
applying a second reset waveform in a reset period of at least one second
subfield (paragraph [0030]),

wherein the second reset waveform comprises, in the following order:

a first driving waveform to generate a reset surface discharge in case
the cell was sustained during the previous subfield and  to increase
gradually the voltage difference between the scan and the sustain
electrode, and a voltage difference between the scan and the address
electrode in case the cell was not sustained during the previous subfield
(paragraph [0050] and fig. 2))

a second driving waveform for establishing a wall voltage in the cell to
generate a discharge between the scan electrode and the address electrode
before generating a discharge betweeen the scan electrode and the sustain
electrode (paragraph [0053])

**ANNEX TO THE EUROPEAN SEARCH REPORT
ON EUROPEAN PATENT APPLICATION NO.**

EP 05 10 3850

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2005

| Patent document cited in search report | | | Publication date | Patent family member(s) | | | Publication date |
|---|---|---|---|---|---|---|---|
| EP 1324302 | A | | 02-07-2003 | KR | 2003029718 | A | 16-04-2003 |
| | | | | CN | 1410960 | A ,C | 16-04-2003 |
| | | | | CN | 1567407 | A | 19-01-2005 |
| | | | | EP | 1324302 | A2 | 02-07-2003 |
| | | | | JP | 2003177704 | A | 27-06-2003 |
| | | | | US | 2003117384 | A1 | 26-06-2003 |
| EP 1022715 | A | | 26-07-2000 | JP | 2000214823 | A | 04-08-2000 |
| | | | | JP | 2000242224 | A | 08-09-2000 |
| | | | | CN | 1271158 | A ,C | 25-10-2000 |
| | | | | CN | 1536545 | A | 13-10-2004 |
| | | | | CN | 1510648 | A | 07-07-2004 |
| | | | | EP | 1022715 | A2 | 26-07-2000 |
| | | | | KR | 2000053573 | A | 25-08-2000 |
| | | | | TW | 516014 | B | 01-01-2003 |
| | | | | US | 6294875 | B1 | 25-09-2001 |
| US 2002135542 | A1 | | 26-09-2002 | CN | 1377019 | A | 30-10-2002 |
| | | | | DE | 10162258 | A1 | 26-09-2002 |
| | | | | FR | 2822577 | A1 | 27-09-2002 |
| | | | | GB | 2373913 | A | 02-10-2002 |
| | | | | JP | 2002318563 | A | 31-10-2002 |
| | | | | KR | 2002075190 | A | 04-10-2002 |
| US 2003030598 | A1 | | 13-02-2003 | JP | 2003050562 | A | 21-02-2003 |
| | | | | EP | 1288896 | A2 | 05-03-2003 |
| | | | | EP | 1515296 | A2 | 16-03-2005 |
| | | | | TW | 546622 | B | 11-08-2003 |
| | | | | US | 2004212567 | A1 | 28-10-2004 |
| EP 1047042 | A | | 25-10-2000 | JP | 2000305519 | A | 02-11-2000 |
| | | | | CN | 1271156 | A ,C | 25-10-2000 |
| | | | | EP | 1047042 | A2 | 25-10-2000 |
| | | | | TW | 561444 | B | 11-11-2003 |
| | | | | US | 6836261 | B1 | 28-12-2004 |

EPO FORM P0459

For more details about this annex : see Official Journal of the European Patent Office, No. 12/82